# EUROPEAN PATENT APPLICATION

(11) **EP 1 873 600 A1**
(43) Date of publication of application: **02.01.2008**
(21) Application number: 06730179.6
(22) Date of filing: 28.03.2006
(51) Int. Cl.: G05B 19/418, G06Q 10/00, G06Q 50/00

(54) **PROCESSING MANAGEMENT SYSTEM AND COMPUTER-READABLE RECORDING MEDIUM**

(30) Priority: 31.03.2005 JP 2005101097
(71) Applicant: Pentax Corporation, Tokyo 174-8639 (JP)
(72) Inventor: NAKAMURA, Kazuo, c/o PENTAX Corporation, Tokyo 1748639 (JP)
(74) Representative: Schaumburg, Thoenes, Thurn, Landskron
(86) International application number: PCT/JP2006/306231
(87) International publication number: WO 2006/106646

(57) **Abstract**

A system includes a product data generation means that generates product data corresponding to a product of a previous process, a partial object data generation means that generates partial object data corresponding to a partial object of a next process, and a management data generation means that generates, in regard to relationship between processes, management data formed as a single file in which the product data and the partial object data are associated with connection information representing connection between the previous process and the corresponding next process. The management data generation means adds path information which indicates that a management target has moved from the previous process to the corresponding next process, to the management data, in such a manner that paths are accumulated in the path information each time a process is executed.

## Description

### TECHNICAL FIELD

The present invention relates to a process management system modeled as a structure in which a plurality of processes are arranged hierarchically by connecting at least one previous process to a next process successively.

### BACKGROUND OF THE INVENTION

Conventionally, when products are manufactured on a product line, various types of parts are mounted on a main part while the main part is conveyed along the product line from an upstream side to a downstream side. In Japanese Patent Provisional Publication No. 2001-56706A, the assignee of this application suggested a management system capable of simplifying manufacturing management and enhancing a function of traceability (i.e., a tracing function). In this publication, the assignee focuses attention on the fact that each part used by manufacturing equipment is previously manufactured as a product in another manufacturing equipment. In addition, the assignee regards a functional unit, where parts are collected and then a product (i.e., a part manufactured with each manufacturing equipment) is manufactured, as a "process", and expresses manufacturing of a final product as a hierarchical structure of a plurality of processes.

### DISCLOSURE OF THE INVENTION

It is required to simplify management to be conducted in the management system disclosed in the publication and to enhance the function of traceability. It is also required to make it possible to trace an article (including a product and a part) with a general-purpose apparatus. However, to conduct tracing for an article in a condition where the former request is satisfied, use of the management system disclosed in the publication or use of dedicated software is required.

The present invention has been made in consideration of the above problems. It is therefore the object of the present invention to provide a process management system capable of simplifying management and enhancing the function of traceability while also achieving tracing with a general-purpose apparatus. It is also the object of the present invention to provide a computer readable medium used for such a system.

A process management system for solving the above mentioned problem according to an aspect of the invention is a system modeled as a structure in which a plurality of processes are arranged hierarchically by successively connecting a previous process for producing, as products, articles to be used as partial objects in a next process with the next process for producing secondary products at least using each of the products produced in the previous process as a partial object. The process management system includes a product data generation means that generates, in regard to a management target, product data corresponding to a product of the previous process, a partial object data generation means that generates partial object data which corresponds to a partial object of the next process and to the product, and a management data generation means that generates, in regard to relationship between processes, management data formed as a single file in which the product data and the partial object data are associated with connection information representing connection between the previous process and the corresponding next process. The management data generation means adds path information which indicates that the management target has moved from the previous process to the corresponding next process, to the management data, in such a manner that paths are accumulated in the path information with execution for processes.

A computer readable recording medium for solving the above mentioned problem according to an aspect of the invention stores management data for managing each process of products produced through a plurality of processes. The computer readable recording medium includes a plurality of article group storage areas respectively corresponding to a plurality of article groups which correspond to a cluster of articles constituting a product group carried between processes. For each of the plurality of article group storage areas, management data is formed as a single file. In regard to each relationship between processes, the management data includes an article group identification data for identifying each article group, data which is associated with the article group identification data and relates to a process in which the article group is used, the data including first process data concerning a first process in which produced articles are collected to form the article group, and second process data concerning a second process in which articles are extracted from the article group, and path data corresponding to path information indicating that the articles are transferred from the first process to the corresponding second process, the path data being formed such that paths are accumulated therein with execution for processes.

### BRIEF DESCRIPTION OF THE DRAWINGS

[Fig. 1] Fig. 1 is an illustration showing a moving path of a box moving between processes according to an embodiment of the invention.
[Fig. 2] Fig. 2 schematically shows each process and relationship between processes according to the embodiment of the invention.
[Fig. 3] Fig. 3 is an illustration showing a configuration of a management system according to the embodiment of the invention.
[Fig. 4] Fig. 4 is an illustration showing a configuration of a server according to the embodiment of the invention.
[Fig. 5] Fig. 5 is an illustration showing a configuration of a terminal according to the embodiment of the invention.
[Fig. 6] Fig. 6 is a flowchart illustrating a management data update process according to the embodiment of the invention.
[Fig. 7] Fig. 7 is an explanatory illustration for explaining management data according to the embodiment and corresponding to the flowchart (S1-S3) shown in Fig. 6.
[Fig. 8] Fig. 8 is an explanatory illustration for explaining the management data according to the embodiment and corresponding to the flowchart (S4-S6) shown in Fig. 6.
[Fig. 9] Fig. 9 is an explanatory illustration for explaining the management data of a box a1 to be made finally in the embodiment of the invention.
[Fig. 10] Fig. 10 is an explanatory illustration for explaining the management data of a box b1 to be made in the embodiment of the invention.
[Fig. 11] Fig. 11 is an explanatory illustration for explaining the management data of a box c1 to be made in the embodiment of the invention.
[Fig. 12] Fig. 12 is an explanatory illustration for explaining the management data of a box f1 to be made in the embodiment of the invention.

### REFERENCE TO SIGN

- 1: Server
- 2: PC
- 3A-3F: Terminal
- 11: CPU
- 13: HDD
- 31: PCL
- 33: BARCODE READER
- a1: BOX

### BEST MODE FOR CARRYING OUT THE INVENTION

A management system according to the embodiment is a system for managing the entire product line including a plurality of processes. The term "process" as used herein means a functional unit where collected parts are used to manufacture a product. That is, the "process" means a functional unit achieved by various types of manufacturing facilities such as a machine tool installed in a certain area in the manufacturing facilities such as a plant, various types of warehouses for storing parts and products, and workers who work for manufacturing through the manufacturing facilities and warehouses. The manufacturing of final products is modeled as a tree structure where these processes are connected successively in a hierarchical structure.

These processes are connected to each other in a predetermined order. In each process, a product is manufactured with parts carried from a previous process and then the product is carried toward a next process. For example, the parts and products are treated in a condition where several tens of or several hundreds of parts and products are stored in a box. Each box is provided with box identification for distinguishing one box from another box. More specifically, a barcode representing identification of a box is attached to a surface of each box. The identification may be information for identifying each box in regard to all of the processes. Alternatively, the identification may be information for identifying each box in regard to a single process.

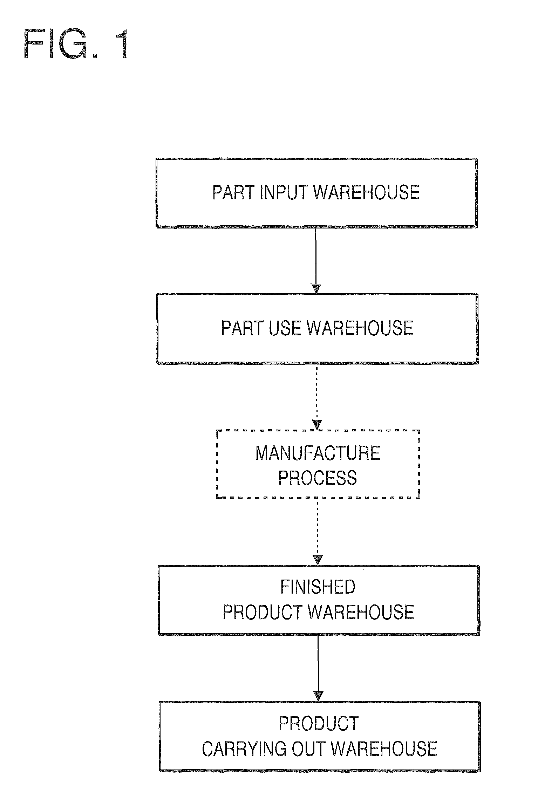

The various warehouses include a part input warehouse, a part use warehouse, a part output warehouse, a finished product warehouse, and a product carrying out warehouse. Hereafter, transfer of parts and products between warehouses in each process is explained with reference to Fig. 1.

When a box containing parts arrives at a certain process, a worker stores the box in the part input warehouse. Then, the worker selects a desired box from the boxes stored in the part input warehouse, and then transfers the selected box to the part use warehouse. Then, the worker manufactures a product with parts in the box transferred to the part use warehouse. Finished products are then stored successively in a box which is different from the box storing the parts. After finish of manufacturing, the worker stores the box containing the finished products in the finished product warehouse. For shipment, the worker selects required boxes from the boxes in the finished product warehouse and transfers the selected boxes to the product carrying out warehouse. It should be noted that the boxes transferred to the product carrying out warehouse are immediately carried out to a next process (in particular, to the part input warehouse for a next process).

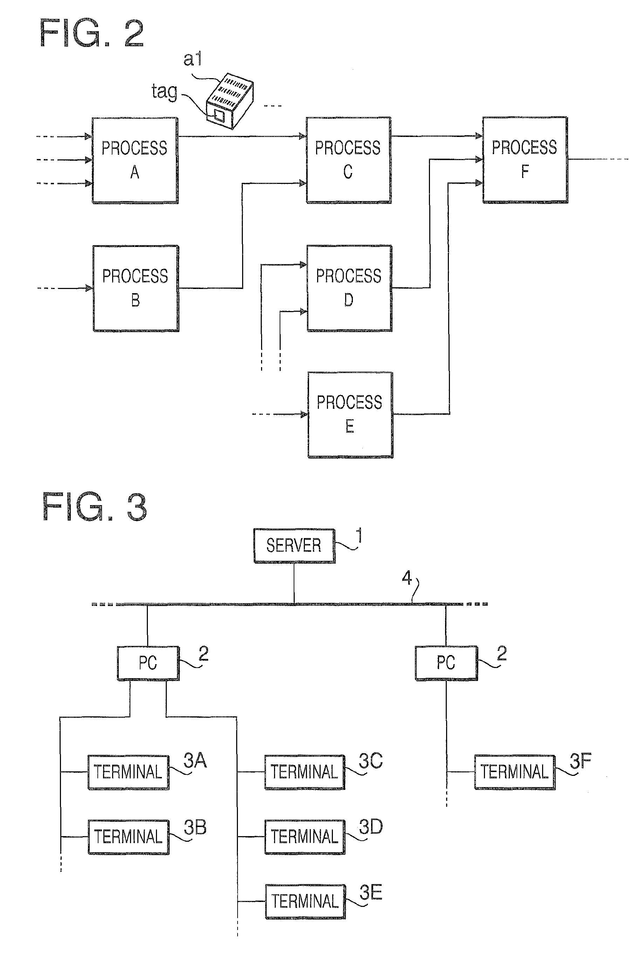

Fig. 2 schematically illustrates relationship between processes. In Fig. 2, six processes (a process A, a process B, a process C, a process D, a process E, a process F) of the plurality of processes are illustrated.

In Fig. 2, the process C receives products finished in the process A and products finished in the process B as parts for the process C. Then, the process C subjects the received parts to assembling or processing to finish them as products, and carries them to the process F.

The process F receives the products of the process C, the products of the process D, and the products of the process E to finish products of the process F. In this example, the products of the process F are regarded as final products of the entire manufacturing processes.

Next, a configuration of the management system for managing each process in the above mentioned manufacturing processes is described. Fig. 3 illustrates an example of a configuration of the management system according to the embodiment. The management system according to the embodiment has a server 1, a plurality of personal computers (hereafter, abbreviated as PC) 2 connected to the server 1 through a LAN 4 having a configuration as a network, and a plurality of terminals 3A to 3F connected to the PC 2. The terminals 3A to 3F are provided for the processes A to F, respectively. It should be understood that the configuration of the management system is not limited to one described above.

Hereafter, the server 1, the PC 2, and the terminals 3A to 3F are explained in detail.

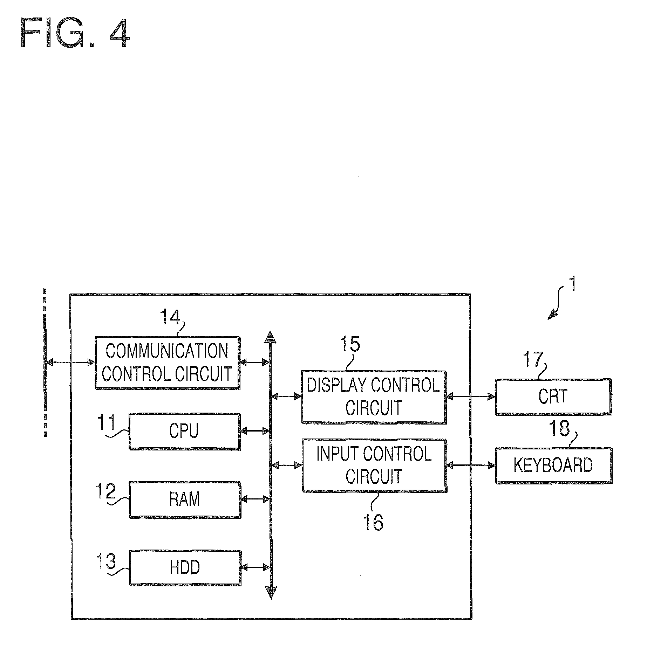

Fig. 4 illustrates a configuration of the server 1. As shown in Fig. 4, the server 1 has a CPU (Central Processing Unit) 11, a RAM (Random Access Memory) 12, an HDD (Hard Disk Drive) 13, a communication control circuit 14, a display control circuit 15, and an input control circuit 16, which are connected to each other via a bus. Further, the server 1 has a CRT 17 connected to the display control circuit 15, and a keyboard 18 connected to the input control circuit 16. The server 1 is connected to the LAN 4 through the communication control circuit 14.

In the HDD 13, various programs including an operating system and a database program has been stored in advance. In the HDD 13, data associated with a link representing connection between processes is also stored as management data which is described later. The term link as used herein means connection information which exists between process in the management system and is used for connecting processes with each other while associating them with each other. In the embodiment, the link corresponds to box identification information.

The CPU 11 reads a program store in the HDD 13 and loads the program on a certain area of the RAM 12. Further, the CPU 11 outputs necessary information for a worker by controlling the display control circuit 15 to display an image on the CRT 17. When the user conducts an input operation through the keyboard 18, the CPU 11 detects the input operation through the input control circuit 16. As described in detail below, if deficiencies are found in the manufactured products, the worker is able to instruct the server 1 to trace the defective products by inputting a predetermined command through the keyboard 18.

Each PC 2 has substantially the same configuration as the server 1. The PCs 2 are connected to the server 1 via the LAN 4. Each PC 2 is a device configured to control terminal devices connected thereto. For example, the PC 2 on the left side in Fig. 2 controls the terminals 3A to 3E, and is connected to these terminals via the LAN 4.

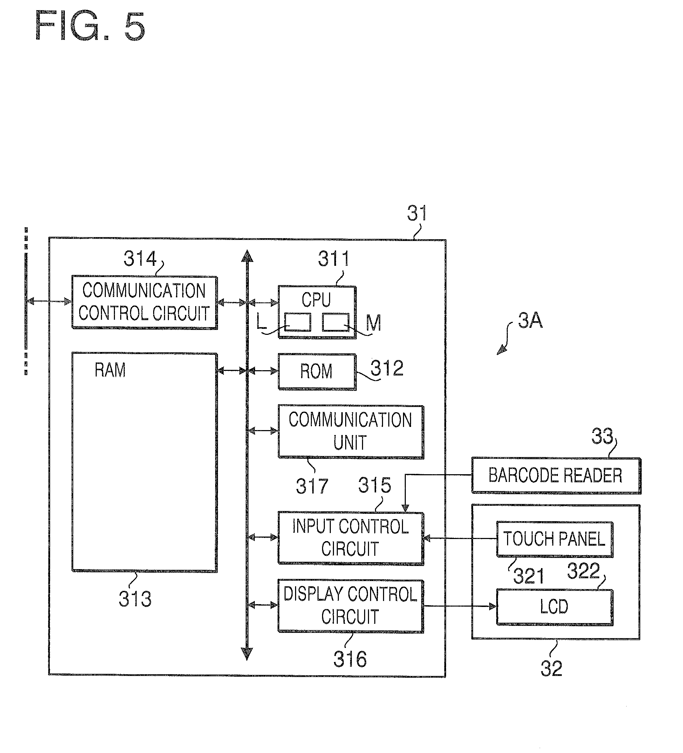

Fig. 5 illustrates a configuration of the terminal 3A. Since other terminals 3B to 3F have the same configuration as that of the terminal 3A, the terminal 3A is explained and explanations of the terminals 3B to 3F are omitted. As shown in Fig. 5, the terminal 3A has a programmable logic controller (hereafter, abbreviated as PLC) 31, a display input device 32, and a barcode reader 33.

The PLC 31 has a CPU 311, a ROM (Read Only Memory) 312, a RAM 313, a communication control circuit 314, an input control circuit 315, a display control circuit 316, and a communication unit 317. The CPU 311 includes a timer M functioning as a clocking means therein. The CPU 311 is able to obtain time (year, month, day, hour, minute, second) from the timer M. Further, the CPU 311 includes a counter L which counts a use time of a part or a manufacturing time of a product. In the ROM 312, various programs such as a database program have been stored in advance.

The display input device 32 has a touch panel 321 and a liquid crystal panel (hereafter, abbreviated as an LCD) 322. The touch panel 321 is placed on the screen of the LCD 322, and is connected to the input control circuit 315 of the PLC 31. The LCD 322 is connected to the display control circuit 316 of the PLC 31.

The barcode reader 33 is used to read the box identification information attached, as a form of a barcode, to a box containing parts/products. The barcode reader 33 is connected to the input control circuit 315 of the PLC 31.

The CPU 311 of the PLC 31 loads a program stored in the ROM 312 to a predetermined area of the RAM 313 to execute the program. The CPU 311 controls the display control circuit 316 to display an image on the LCD 322 of the display input device 32. In the image, a carrying in button, a use start button, a manufacture start button, a use end button, a manufacture end button, a carrying out button, a work suspending button, a work restart button are included. The carrying in button is a button to be pressed when parts have been carried in a process. The use start button is a button to be pressed when use of the parts is started. The manufacture start button is a button to be pressed when manufacturing of products is started. The use end button is a button to be pressed when use of the parts is finished. The manufacture end button is a button to be pressed when the manufacture of products is ended. The carrying out button is a button to be pressed when the products are carried to a next process. The work suspending button is a button to be pressed when the user suspends use of the parts or the manufacture of products. The work restart button is a button to be pressed when the user restarts the use of the parts or the manufacture of products in a process.

The worker is able to conduct an input operation by pressing the button displayed on the LCD 322. That is, the touch panel 321 located on the screen of the LCD 322 is able to detect the pressed position on the screen by the worker, and to transmit a signal representing the pressed position to the input control circuit 315 of the PLC 31. Further, the CPU 311 is able to detect the pressed position on the screen by the worker through the input control circuit 315, and to recognize which of the positions of the buttons on the screen coincides with the detected position.

When the worker causes the barcode reader 33 to read a barcode, the barcode reader 33 obtains barcode data corresponding to the barcode, and transmits the obtained data to the input control circuit 315 of the PLC 31. The PLC 31 stores temporarily the obtained data in the RAM 313.

The terminals 3A to 3F configured as above are connected to the LAN 4 via the communication control circuit 314. The data stored temporarily in the RAM 313 is written in the HDD 13 of the server 1 through the PC 2 and the LAN 4.

To each box storing parts/products, an IC tag having an antenna and a memory is attached. The ID tag communicates with the communication unit 317 of the PLC 31 through the antenna, and thereby receives various types of data transmitted therefrom and accumulates the data in the memory.

Next, an actual flow of parts/products in each process and data processing in the management system are explained. As described above, between the processes, parts/products are treated in a condition where the parts/products are stored in a box (i.e., a certain number of parts/products are gathered).

The management system executes each process while associating each box with a unit of management data (one file). Each of pieces of management data is processed by the database program of the server 1 and the database program in each of the terminals 3A to 3F.

The management data is data associated with the box identification information of a box transferred between two processes. In the box, products of a process (previous process) are stored. Contents of the box are treated as parts in a next process. Therefore, in the management data, data regarding a previous process, i.e., data (previous process data) defined when articles in the box are regarded as products, and data regarding a next process, i.e., data (next process data) defined when the articles in the box are regarded as parts are included.

The previous process data includes product process name data, product box content data, product manufacture start time data, product manufacture end time data, product environmental condition data, product carrying in time data, product carrying out time data, product operator data, product defect information, product manufacture time data. The product process name data is data representing a name of a process where the products are manufactured. The product box content data is data representing contents of the box (i.e., representing whether the box contains nondefective products or defective products). The product manufacture start time data is data representing the time when the manufacturing of products is started. The product manufacture end time data is data representing the time when the manufacturing of products is finished. The product environmental condition data is data representing an environmental condition such as humidity during the manufacturing. The product carrying in time data is data representing the time when the products are carried in the finished product warehouse. The product carrying out time data is data representing the time when the products are carried to a next process. The product operator data is data regarding a worker who is in charge of manufacturing the products. The product defect information is data representing defective products occurred during the manufacturing of products. The product manufacture time data is data representing the time during which the worker manufactured the products.

It is understood that the product process name data can be replaced with data representing a name of a process where the products are stored in the box. The product manufacture start time data can be replaced with data representing the time when storing of the products into the box is started. The product manufacture end time data can be replaced with data representing the time when storing of the products into the box is finished.

The product manufacture time data is data representing a count generated by the counter L of the CPU 311 by counting a time period between a time when the manufacture start button is pressed and a time when the manufacture end button is pressed. More specifically, the count starts to increase from a count (=0) when the manufacture start button is pressed. When the work suspend button is pressed, the count is fixed. Then, the count starts to increase again from the fixed value when the work restart button is pressed. When the manufacture end button is pressed, the count is stored temporarily in the RAM 13 as a count value corresponding to the product manufacture time data. The count is then converted to the product manufacture time data by a program. Since a time period during which the count increases is a time obtained by subtracting a time corresponding to suspending of work (e.g., intermissions of the worker) from a time period between start of the manufacturing of products and end of the manufacturing of products, the count corresponds to a time during which the worker actually manufactures the products. Therefore, the product manufacture time data corresponds to a time actually spent for the manufacturing of products.

The above mentioned product defect information includes various types of data. This data includes product pass number data, product failure number data, product pending number data, product rework number data, defective process name group data, part group-specific defect number data, defective product item data, and item-specific defective product number data. The product pass number data is data representing the number of products manufactured as nondefective products in a process. The product failure number data is data representing the number of defective products in the process. The product pending number data is data representing the number of products of which pass or failure is unclear in the process. The product rework number data is data representing the number of products which can become nondefective products by an easy rework. The defective process name group data represents a process name group where parts, used when defectives are produced in the process, are manufactured. The part group-specific defect number data is data representing the number of defective products classified by a part group when the defectives are produced. The defective product item data is data of an item representing a factor of the defectives of the products. The item-specific defective product number data is data representing the number of defective products classified by the item.

The next process data includes, for example, part process name data, part use start time data, part use end time data, part carrying in time data, part preparation time data, part user data, part defect information, and part use time data. The part process name data is data representing a name of a process where parts are used. The part use start time data is data representing the time when use of the parts is started. The part use end time data is data representing the time when use of the parts is finished. The part carrying in time data is data representing the time when the parts are carried in the part input warehouse. The part preparation time data is data representing the time when the parts are carried in the part use warehouse. The part user data is data regarding the worker who used the parts. The part defective information is data regarding defectives during use of the parts. The part use time data is data representing a time actually spent by the worker for use of the parts.

The part process name data can be replaced with data of a name of a process where parts are unpacked from a box. The part use start time data can be replaced with data representing the time when unpacking of the parts from the box is started. The part use end time data can be replaced with data representing the time when the unpacking of the parts from the box is finished.

The part use time data is data representing a count generated by the counter L of the CPU 311 by counting a time period between a time when the use start button is pressed at the start of use of parts and a time when the use end button is pressed at the end of use of the parts. More specifically, the count starts to increase from a count (=0) when the use start button is pressed. When the work suspend button is pressed, the count is fixed. Then, the count starts to increase again from the fixed value when the work restart button is pressed. When the use end button is pressed, the count is stored temporarily in the RAM 313 as a count value corresponding to the part use time data. The count is then converted to the part use time data by a certain program. Since a time period during which the count increases is a time obtained by subtracting a time corresponding to suspending of the work (e.g., intermissions of the worker) from a time period between start of use of the parts and end of use of the parts, the count corresponds to a time during which the worker actually uses the parts. Therefore, the part use time data corresponds to a time actually spent for the use of the parts.

The above mentioned part defect information includes various types of data. This data includes part pass number data, part failure number data, defective part item data, and item-specific defective part number data. The part pass number data is data representing the number of parts used as nondefectives in the process. The part failure number data is data representing the number of parts judged to be defectives in the process. The defective part item data is data of an item representing a factor of failure of the parts. The item-specific defective part number data is data representing the number of defective parts for each item.

By thus obtaining the product defect information and the part defect information, a manager side is able to plan a detailed manufacturing schedule of a process while also considering the percentage of defectives, to predict occurrence of failure, to treat preferentially the process where the defects are found, and to achieve early detection of the defectives.

When the articles (parts/products) are transferred in each process or between processes, the management data is updated in the management system in accordance with the flow of the articles.

For example, when attention is given to the process C in Fig. 2, the products shipped from the process A are received by the process C as parts for the process C, and the products shipped from the process B are received by the process C as parts of the process C. In this case, the product groups manufactured in the process A are carried toward the process C in a condition where the product groups are assigned predetermined box identification information (a1, a2, a3···) provided as barcodes, for example. Hereafter, the box assigned the box identification information "a1" is abbreviated as "box a1" (boxes assigned other types of box identification information are similarly abbreviated).

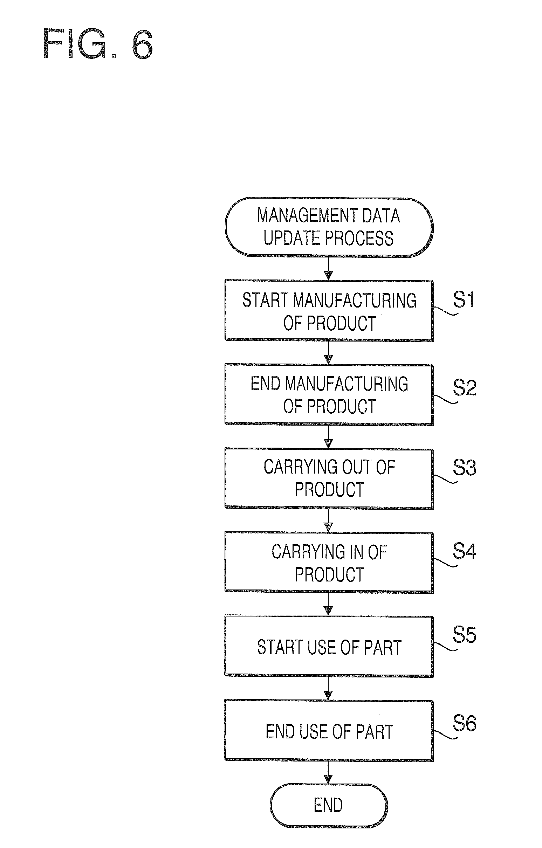

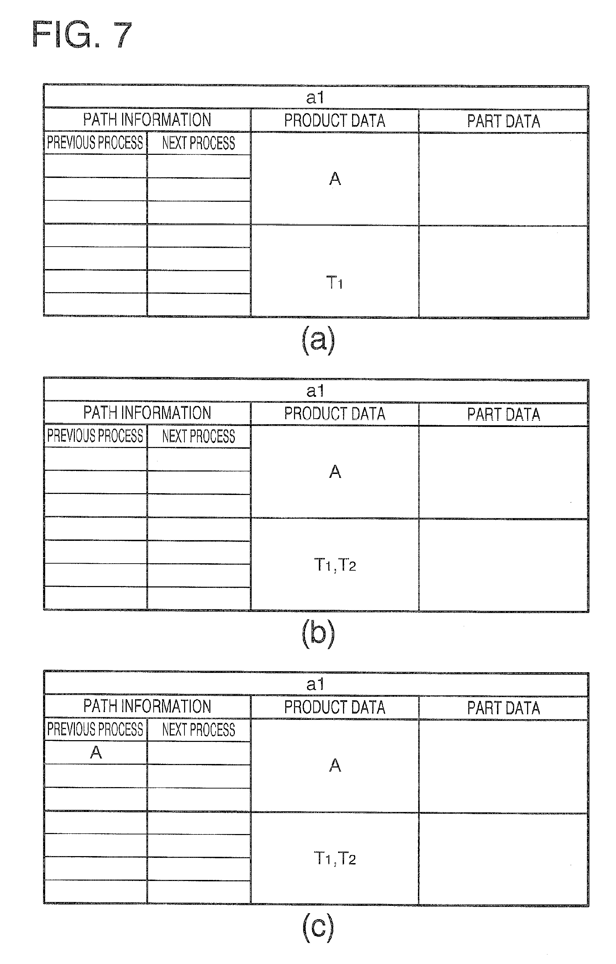

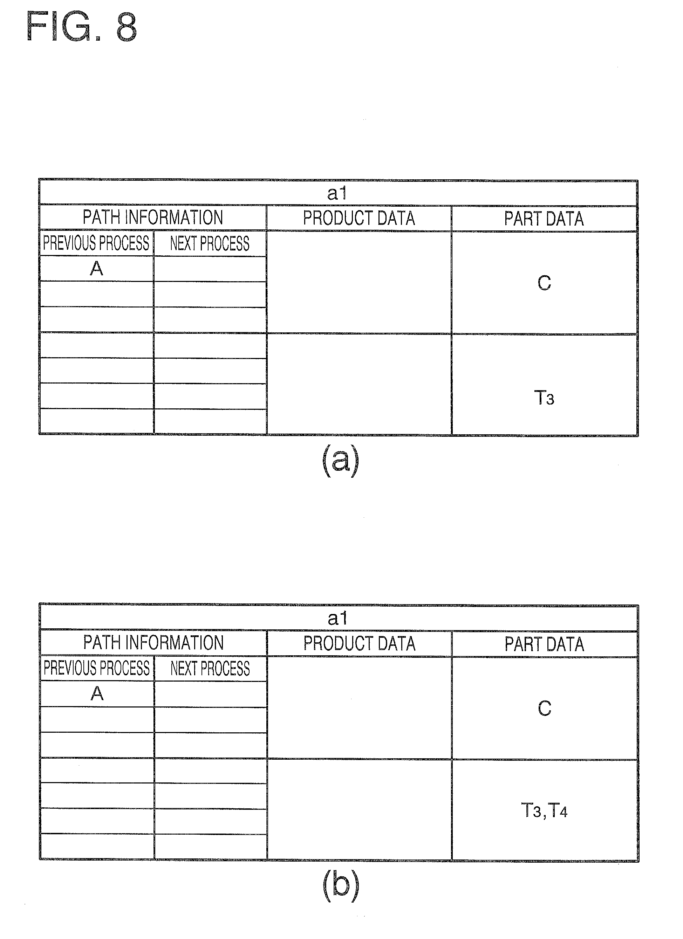

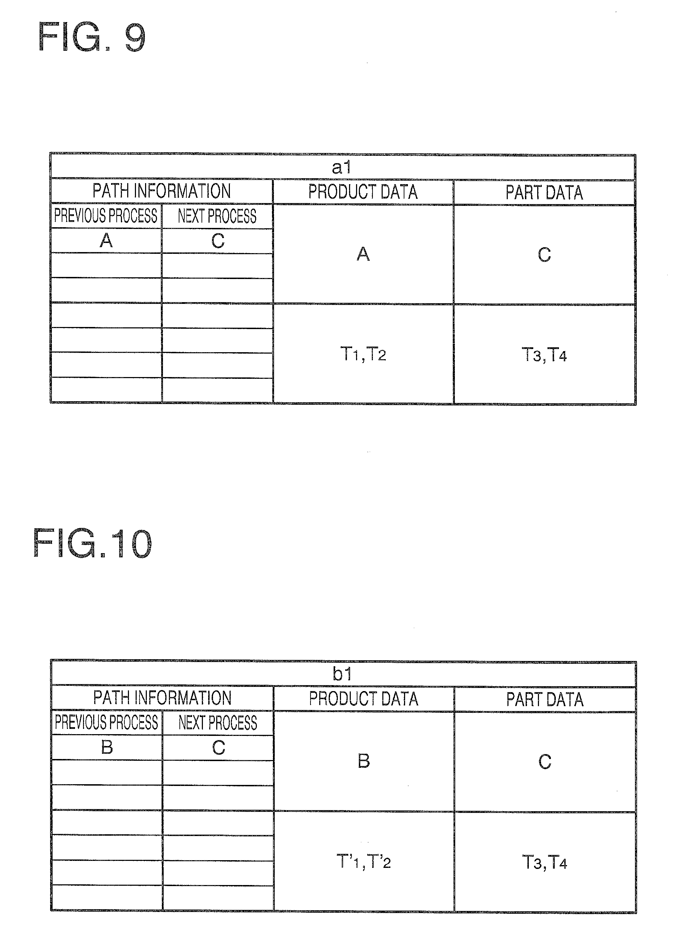

Fig. 6 is a flowchart illustrating a management data update process according to the embodiment. Fig. 7 shows explanatory illustrations which correspond to the flowchart (S1-S3) of Fig. 6 and which explain the management data according to the embodiment. Fig. 8 shows explanatory illustrations which correspond to the flowchart (S4-S6) of Fig. 6 and which explain the management data according to the embodiment. Fig. 9 is explanatory illustrations for explaining the management data generated through the process of S1-S6. Hereafter, an example of an update process (an update process for the management data D regarding the box a1) for management data according to the embodiment is explained with reference to Figs. 6 to 9. Hereafter, the management data D for the box a1 is abbreviated as "management data Dₐ₁" (the management data D for other boxes are similarly abbreviated). It should be noted that data shown in drawings (Fig. 7 to 12) for explaining the management data is assigned reference numbers only for the purpose of explanations.

When manufacture of products are started in the process A (S1), the worker first selects a box storing parts to be used from now on and a box in which products manufactured with the parts are to be stored. More specifically, the worker selects a box from each of box groups storing articles which are treated as parts in the process A, and uses the barcode reader 33 to read a barcode attached thereto. Further, the worker selects a box from a box group for storing the products manufactured in the process A, and uses the barcode reader 33 to read a barcode attached to the box. Here, only the box a1 of a box group storing the products manufactured in step A is explained for the sake of simplicity, and explanations for other boxes are omitted. Since a processing example of the box a1 storing parts is explained later, an update process for the management data regarding a box group storing parts is not explained here.

To the box a1, a barcode including data (the process A in this case) of a name of a process where manufactured products are stored and data (the product box content data which represents nondefective products in this case) indicating which of the nondefective product, defective product, and unclear product the box contains is attached. The data read by the barcode 33 is stored in the RAM 313 of the terminal 3A.

The product process name data (hereafter, referred to as "A") is equal to the part process name data (described later) assigned to the box storing the articles treated as parts in the process A. Therefore, into the management data Dₐ₁ including the product process name data, "the process C" is included as the part process name data.

When the above mentioned data is inputted to the terminal 3A through the barcode reader 33, the worker operates the touch panel 321 to further input data to the terminal 3A. The data inputted here includes the product operator data, the product environmental condition data, and the product manufacture start time data. Specifically, the product manufacture start time data is a time of the timer M stored in the RAM 313 when the manufacture start button is pressed.

Hereafter, "T₁" is assigned to the product manufacture start time data for the sake of convenience. When the manufacture of products are started in the process A, the product process name data "A" and the product manufacture start time data T₁ are stored in the RAM 313 (see Fig. 7(a)). Considering the input of the product operator data and the product environmental condition data as a trigger, it is possible to obtain the time when these pieces of data are inputted to the terminal 3A through the internal timer, and to store it in the RAM 313 as the product manufacture start time data T₁. The product operator data is not required each time the work is conducted. Input of the product operator data is required when the worker starts to use the terminal 3A. However, unless a new input is provided in the subsequent processes, the same product operator data is used successively.

The manager side is able to recognize the ability of the worker in charge of the process A to manufacture the product through the product operator data. As a way of recognizing the ability, a comparison with the product operator data in another process or the part user data in another process can be listed. The manager side is able to recognize the speed of the manufacturing of products for each worker. For example, the speed of the manufacturing of products can be obtained by the number of manufactured products per a unit of time in each process based on information obtained from the management data. If a product which is judged to be a nondefective product in the process A is judged to be a defective part in the process C, there is a possibility that the defective/nondefective judgment in the process A or in the process C is an error. When an error in the defective/nondefective judgment is found after the later investigation, the manager side is able to identify the worker who made a mistake. Since it is possible to manage attendance of the worker by utilizing the product operator data, the manager side is able to urge the worker to enhance the ability. It is also possible to judge whether the amount of work is appropriate based on working hours or the number of manufactured products of the worker. If the speed of the manufacturing of products decreases extremely, it is possible to judge whether the worker is in poor physical condition.

The product environmental condition data is data for notifying the manager of a condition (e.g., temperature or humidity) measured when a product is judged to be defective or nondefective. The manager side is able to analyze the factor of the defect (the condition of temperature or humidity) based on the product environmental condition data.

The product manufacture start time data T₁ and various types of time data which are described later are data used for analysis of the number of manufactured products per a unit of time, trace information, a lead time, and a failure analysis.

When the product process name data "A" and the product manufacture start time data T₁ are inputted to the terminal 3A, the worker starts to manufacture products in the process A. Each time the finished product is placed in the box a1, the worker inputs the condition of the product to the RAM 313 through the touch panel 321. The term condition of the product as used herein relates to the defectives occurred during the manufacture of products. The data concerning the defectives inputted to the terminal 3A includes, for example, the product pass number data, the product pending number data, the product rework number data, the defective process name group data, the part group-specific defect number data, the defective product item data, and the item-specific defective product number data. The box a1 is a box for storing nondefectives (products to be used as parts in the process C). Therefore, each time the worker places a product in the box a1, the worker operates the touch panel 321, so that the number of passed products (nondefectives) can be counted.

If the box a1 is a box for storing defectives, the worker executes a certain mode for processing defectives on the terminal 3A so that the product failure number data, the defective process name group data, the part group-specific defect number data, the defective product item data, and the item-specific defective product number data are inputted. If the box a1 is a box for storing products of which pass or failure is unclear, the worker executes a predetermined process for processing the products of which pass or failure is unclear on the terminal 3A, and inputs the product pending number data to the terminal 3A. If the box a1 is a box for storing reworked parts, the worker executes a predetermined process for processing reworked parts on the terminal 3A, and inputs the product rework number data to the terminal 3A.

When the manufacturing of products (including a work for storing products) for the box a1 is finished (S2) and the manufacture end button is pressed by the worker through the touch panel 321, the time of pressing is stored in the RAM 313 as the product manufacture end time data (hereafter, the product manufacture end time data is assigned "T₂"), and the total number of passed products is stored in the RAM 313 as the product pass number data. (see Fig. 7(b)).

The manager side is able to figure out the number of manufactured products per a unit of time based on the product manufacture end time data T₂, the product manufacture start time data T₁, the product pass number data, the product failure number data, the product pending number data, and the product rework number data.

When the manufacturing of products in the process A is finished, the box a1 is carried in the finished product warehouse as a stock. At this moment, the product carrying in time data is inputted to the RAM 313. If the latest time data of the management data Dₐ₁ is the product carrying in time data, this means that the box a1 is stored in the finished product warehouse. That is, the product carrying in time data is also data for notifying the manager of the current position information of the box a1.

If the process C requests the manufactured products from the process A, the worker of the process A transfers the box a1 stored in the finished product warehouse to the product carrying out warehouse. That is, the box a1 is carried to the process C (S3). At this moment, the worker obtains data (the product carrying out time data) of the time when the box a1 is transferred to the product carrying out warehouse (i.e., the time when the box a1 is transferred to the product carrying out warehouse) from the internal timer by pressing the carrying out button, and stores the data in the RAM 313.

The various types of data stored temporarily in the RAM 313 in the processes previously executed (S1-S3) are data obtained by considering articles in a box as products, and are data regarding the process A (hereafter, the data are abbreviated as box a1 product data). When the product carrying out time data is stored in the RAM 313, the box a1 leaves from the process A. Therefore, the management data Dₐ₁ storing only the box a1 product data is transmitted to the server 1 via the PC2 and the LAN 4, and is stored in the HDD 13 as one file.

In this case, the server 1 adds the process "A" as path information to the management data Dₐ₁ recorded in the HDD 13. Then, the server 1 transmits the management data Dₐ₁ to which the path information is added, to the terminal 3A via the LAN 4 and the PC2. The management data Dₐ₁ is transmitted form the communication unit 317 of the terminal 3A to the outside, and is received by the IC tag of the box a1 and is stored in the memory of the IC tag. As a result, the management data Dₐ₁ containing the path information is stored in the IC tag of the box a1 (see Fig. 7(c)).

When the box a1 carried out of the process A is carried in the part input warehouse of the process C (S4), the worker uses the terminal C provided for the process C to proceed the updating process of the management data Dₐ₁. Since the terminal C has the same configuration as that of the terminal A, explanations of each component in the terminal C are omitted. In the following, each component of the terminal C is indicated by adding "c" to a symbol of a corresponding component of the terminal A.

When the box a1 is carried in the part input warehouse, data (part carrying in time data) of the time when the box a1 is carried in the part input warehouse is stored in the RAM 313 by pressing the carrying in button of the touch panel 321c of the terminal C. If the latest time data of the management data Dₐ₁ is the part carrying in time data, this means that the box a1 is stored in the part input warehouse. That is, the part carrying in time data is data for notifying the manager of the current position information of the box a1.

By calculating a difference between the part carrying in time data and the product carrying out time data, it is possible to know a lead time from the process A to the process C. For example, the lead time calculated here may be stored in the management data of the process A or C together with another data. When the worker prepares the manufacturing work for products in the process C, the worker transfers the box a1 stored in the part carrying in warehouse to the part use warehouse. At this moment, the worker stores data (the part preparation time data) representing the time when the box a1 is transferred to the part use warehouse in the RAM 313c by operating the touch panel 321c.

When the manufacturing of products is started in the process C (S5), the worker of the process C first selects a box from among each box group (boxes storing the products manufactured in the process A or B) storing articles used as parts in the process C. Then, the worker uses the barcode reader 33c of the terminal 3C to read a barcode attached thereto. Further, the worker selects a box from among boxes in which products manufactured in the process C are to be stored. In the following, only the box a1 of boxes storing articles used as parts in the process C is explained for the sake of convenience, and explanations for other boxes are omitted. Explanations for an updating process for boxes storing products manufactured in the process C are made only for the box a1.

To the box a1, the barcode containing the part process name data (i.e., the process C), as well as the above mentioned box identification information a1, the product process name data "A", and the product box content data is attached. The data read by the barcode reader 33c is stored in the RAM 313c.

It should be noted that data represented by the part process name data (hereafter, referred to as "C") is the same as data represented by the product process name data given to a box for storing products manufactured in the process C. Specifically, both represent the "process C".

The worker inputs the above mentioned data to the terminal 3C through the barcode reader 33c. Next, the worker operates the touch panel 321c to further input data to the terminal 3C. For example, the data inputted here includes the part user data and the part use start time data. The part use start time data is the time of the timer M stored in the RAM 313 when the use start button is pressed. In the following, "T₃" is added to the part use start time data for the sake of convenience. As described above, when use of parts is started in the process C, the part process name data and the part use start time data T₃ have been stored in the RAM 313c (see Fig. 8(a)). It is also possible to store the time when the part user data is inputted to the terminal 3C, in the RAM 313c, as the part use start time data T₃, by regarding an input of the part user data as a trigger of the start of use of parts.

The manager is able to grasp the manufacturing performance of the worker in charge of the process C using the part user data as well as the above mentioned product operator data. In addition, the worker is able to judge whether the workload is appropriate based on the working hours and the number of products. It is also possible to judge whether the worker is in poor physical condition when the manufacturing speed of products decreases extremely.

When the part process name data "C" and the part use start time data T₃ are inputted to the terminal 3C, the worker starts to use the parts in the process C. Each time the worker picks up a part from the box a1, the worker inputs a condition of the part to the terminal 3C through the touch panel 321c. The condition of a part as used herein relates to defectives included in the parts stored in the box a1. For example, the data concerning defectives inputted to the terminal 3C includes the part pass number data, the part failure number data, the defective part item data, and the item-specific part number data.

When use of the parts in the process C is finished (S6) and the touch panel 321 is operated (i.e., the use end button is pressed) by the worker, the time of the operation is stored in the RAM 313c as the part use end time data (hereafter, represented by adding "T₄" to the part use end time data for the sake of convenience) (see Fig. 8(b)).

The part process name data "C", the part use start time data T₃, and the part use end time data T₄ stored temporarily in the RAM 313c are data defined when articles stored in a box are regarded as parts, and are data relating to the process C (hereafter, abbreviated as box a1 part data). Since the function of the box a1 (i.e., storage and movement of articles) is finished when the part use end time data T₄ is stored in the RAM 313c, the management data Dₐ₁ containing only the box a1 part data is transmitted to the server 1 via the LAN 4 so that the management data Dₐ₁ containing the box a1 product data previously transmitted is updated. Finally, the management data Dₐ₁ is recorded in the HDD 13 (see Fig. 9) as one file containing both of the box a1 product data and the box a1 part data.

Since the box a1 has been used in the process C via the process A, the server 1 adds "C" to the management data Dₐ₁ as path information representing a next process with respect to the previous process A. With this configuration, as shown in Fig. 9, the path information indicating that the articles in the box a1 have been transferred to the process C via the process A is stored in the management data Dₐ₁ in addition to the box a1 product data and the box a1 part data.

Next, the server 1 transmits the management data Dₐ₁ to which the above mentioned path information is added, to the terminal 3A via the LAN 4 and the PC2. The management data Dₐ₁ is transmitted from the communication unit 317 of the terminal 3A, and is received and accumulated by the IC tag of the box a1. Consequently, the management data Dₐ₁ containing the above mentioned path information is accumulated in the IC tag of the box a1. It should be noted that, for example, in the IC tag, identification information for identifying is stored. The terminal 3A communicates with the IC tag of each box, and determines a destination of the management data by referring to the identification information. If the management data Dₐ₁ is transmitted to the IC tag of the box a1, the terminal 3A searches for the box a1 by communicating with each of boxes placed within a certain communication range until communication with the IC tag of the box a1 is established. When the communication with the IC tag of the box a1 is established, the terminal 3A transmits the management data Dₐ₁ to the IC tag of the box a1.

While steps S4-S5 are executed, part data and path information which are the same as those for the box a1 are generated for the box b1 used, for example, in the process C via the process B. That is, management data D_{b1} which is the same as that for the box a1 is generated for the box b1 (see Fig. 10). In the IC tag of the box b1, path information indicating that articles in the box b1 have been transferred to the process C via the process B is accumulated in addition to the process name data.

While steps S4-S6 are executed, management data D_{c1} containing part data and path information which are the same as those for the box a1 are generated, for example, for the box c1 in which products are stored in the process C. More specifically, in the box c1 of the process C, path information indicating that articles in the box c1 have been transferred to the process C via the process A and the process B is accumulated together with the above mentioned product data.

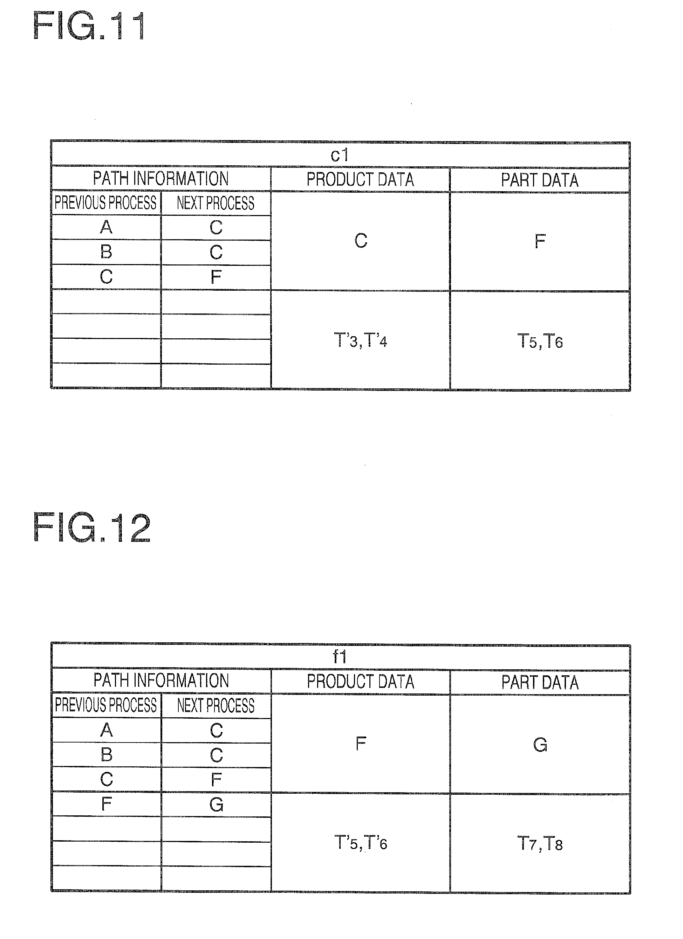

When the processes are further executed and the box c1 is used via the process C, the part data which is similar to that of the box a1 and the management data D_{c1} containing further path information are generated for the box c1 in addition to the above mentioned product data and the path information. As shown in Fig. 11, a next process (process F) with respect to the previous process C which is a next process with respect to the process A and the process B is added as the path information. That is, the path information accumulated in the IC tag of the box c1 is information indicating that articles in the box c1 "have been transferred through the process a process B, process C and process F in this order". In this embodiment, in all the drawings including Fig. 11, the pieces of time data having the same subscript (e.g., "T₃" and "T₃"') represent substantially the same time. Therefore, major parts of a time period between the time data T₃ and T₄ and a time period between the time data T₃' and T₄' overlap with each other.

For example, if the box c1 is returned to the process C from the process F, information indicating that a box is "transferred from the process F to the process C" is added to the information indicating that a box is "transferred via the process A, process B, process C and process F in this order".

The information mentioned as above is added to each box in each process. Each time a process is executed, further information is accumulated in the previous path information. For example, if a process G (not shown) exists as a next process with respect to the process F, path information obtained by adding further information to the path information of the box c1 (i.e., path information indicating that a box is "transferred through the process A, process B, process C, process F and process G in this order") is added to the box f1 storing parts used for the process G.

If tracing is conducted in the management system according to the embodiment, the CPU 11 of the server 1 searches for time data indicating that the process is in the manufacturing (corresponding to time data between the time data T₁ and T₂) and time data indicating that the part is being used (e.g., data corresponding to the time between the time data T₃ and T₄). If an overlap occurs between the time of the management data which has product data associated with a certain process and indicates that products are in a manufacturing process and the time of the management data which has part data associated with the certain process and indicates that parts are being used, this means that the box associated with these pieces of management information is used concurrently in the same process during the overlapped time period. For example, if the time during which articles in the box a1 are used as parts and the time during which manufactured products are stored in the box c1 overlap with each other in the process C, this means that these boxes are used concurrently in the process C and are being associated with each other. If a period during which articles in the box b1 are used as parts and a period during which manufactured products are stored in the box c2 overlap with each other at least partially, this means that these boxes are used concurrently in the process C and are associated with each other. Therefore, by searching for the overlapped time, it is possible to determine which boxes are used to provide parts for manufacturing products stored in a certain box. According to the management system of the embodiment, it is possible to identify an article on a box-by-box basis. Therefore, it is possible to achieve easy management and conduct accurate tracing in a complicated structure of processes in which processed are branched a plurality of times.

As described above, according to the management system of the embodiment, identification information is assigned to each box storing articles being transferred between processes. Each time a process associated with the box is executed, various types of data are collected in association with the identification information, and the collected data for each relationship between processes is stored in the server 1 as a file. Therefore, in the server 1, files associated with each link between processes are gradually accumulated. Consequently, if the manager wants to obtain information on connection between desired processes, the manager is allowed to obtain the information by only searching for a file.

According to a computer readable medium recording management data according to the embodiment, defect data defined when articles are regarded as products in the current process and defect data defined when the articles are regarded as parts in a next process are included in one file. Therefore, if inconsistency occurs between defect information regarding products and defect information regarding parts in the same file, it is possible to quickly judge that defectives are produced. By thus configuring the management data, it is possible to achieve quicker failure analysis.

It is also possible to conduct the above mentioned tracing without using a system (e.g., the server 1). In this case, the tracing is conducted with reference to the path information accumulated in the IC tag of each box. The tracing is explained below in regard to the case where defective products are produced in the process F and the defectives are caused by the process A (i.e., the tracing from the process F to the process A).

In such a case, the tracing is conducted by referring to the IC tag provided in the box (e.g., box a1) of the process F (i.e., the box of the process in which the defectives are produced). By referring to the IC tag of the box f1, it is confirmed that a next process is the process G and a previous process of the next process is the process F as shown in Fig. 12. Further, it is confirmed that in the immediately preceding process, a next process is the process C and a previous process of the next process is the process A or B. Consequently, a target process (the process A) is found and a path from the process F to the process A is defined by connecting the process F, process C and process A in this order. Thus, the tracing is finished.

The IC tag attached to each box may be one which has been widespread. Therefore, the user is able to read the data stored therein with a general-purpose device, without using a particular system including the server 1. Therefore, even a user who does not own the management system according to the embodiment or dedicated software is able to easily know the path information stored therein. As described above, the path information is formed of an extremely small amount of data such as text data. Therefore, it is easy to accumulate the path information branched complicatedly in the IC tag. Consequently, the user is able to know complicated path information concerning a certain article.

Even if the user does not have a device for reading the IC tag, the user is able to easily conduct the tracing. For example, the user is able to know a path of a desired box by browsing the management data of the desired box while accessing the server 1. Since it is only required to browse the data, the user is only required to have a terminal capable of accessing the server 1 without being required to have a program or software which executes tracing based on information connecting processes to each other, such as an overlapped time.

By adopting the process management system and the computer readable medium used in such a system according to the embodiment, it is possible to easily perform the management and the tracing for articles manufactured through the processes connected to each other complicatedly. It is also possible to conduct the tracing with a general-purpose device.

While explanations on the invention are given with reference to the above mentioned embodiment, the invention is not limited to the configuration particularly described in the embodiment, and variations regarding the embodiment can be made in various ways.

In the above mentioned embodiment, the process name is stored as path information. However, in another embodiment, data representing the time relating to each process (e.g., the product manufacture start time or the product manufacture end time) may be stored as path information in addition to storing the process name. In this case, the user is able to know when each process at a certain point in the path is executed only by the information of the IC tag.

In the above mentioned embodiment, an act for manufacturing a product while processing parts is defined as a process, and a cluster being transferred through processes is defined as a box. However, a system configured to quickly judge whether a possibility of a problem arises during movement of articles between processes and a system for tracing the problem can also be applied to other fields (e.g., distribution, an economy, and etc.) by replacing "article", "process", "product", "part" and "box" with other ones, respectively.

For example, the "article" may be replaced with a "tangible object" (e.g., the above mentioned parts and products or meat) or an "intangible" (e.g., an economy, management, or etc.). The "process" may be replaced with "processing" to be applied to various types of articles. The "product" may be replaced with a "produced object" produced in certain processing. The "part" may be replaced with a "partial object" used to make the produced object. The "box" may be replaced with a "cluster" being transferred through processes. By replacing the elements as described above, the management system according to the embodiment may be applied to various forms of process management systems for managing a tangible object such as meat and for managing an intangible corresponding to information for controlling an economy, management or distribution.

As an example, a model in which the above mentioned process F is added to the system shown in Fig. 2 is explained. In such a model, the process A is regarded as a primary process for processing meat produced of a country X, for example. The process B is regarded as a primary process for processing meat produced of a country Y. The processes C, D and E are regarded as processes for heat-treating the meat subjected to the primary process. The process F is regarded as a secondary process for the heat-treated meat. The process G is regarded as a process for packing the heat-treated meat. Assuming that the manufacturer wants to know whether a box f1 storing the meat subjected to the secondary process in the process F contains the meat produced of the country Y. In this case, the tracing may be executed while referring to the IC tag provided in the box f1, as in the case of the above mentioned embodiment. By referring to the IC tag of the box f1 (see Fig. 12), it is confirmed that a next process is the process G, and a previous process with respect to the next process is the process F. Further, it is confirmed that, regarding the preceding process, a next process is the process F, and a previous process with respect to the next process is the process C. Regarding a further preceding process, it is confirmed that a next process is the process C, and a previous process with respect to the next process is the process A or B. Since the process B is a process for processing the meat produced of the country Y, the user is able to know that the meat in the box f1 includes the meat produced of the country Y. As described above, it is possible to know origins of articles in the box or contents of the box by only conducting the tracing with reference to the IC tag, without using the particular system including the server 1.

In an embodiment according to the invention, produced object data may include at least name data of a previous process, time data representing the time when production of the produced object is started, and time data representing the time when the production for the produced object is finished.

In an embodiment according to the invention, partial object data may include at least name data of a next process, time data representing the time when use of partial objects is started, and time data representing the time when use of the partial objects is ended.

In an embodiment according to the invention, a storage means for storing path information obtained by a management data generation means may be added to a produced object and a partial object. For example, the storage means is an IC tag.

## Claims

1. A process management system modeled as a structure in which a plurality of processes are arranged hierarchically by successively connecting a previous process for producing, as products, articles to be used as partial objects in a next process with the next process for producing secondary products at least using each of the products produced in the previous process as a partial object, comprising:
a product data generation means that generates, in regard to a management target, product data corresponding to a product of the previous process;
a partial object data generation means that generates partial object data which corresponds to a partial object of the next process and to the product; and
a management data generation means that generates, in regard to relationship between processes, management data formed as a single file in which the product data and the partial object data are associated with connection information representing connection between the previous process and the corresponding next process,
wherein the management data generation means adds path information which indicates that the management target has moved from the previous process to the corresponding next process, to the management data, in such a manner that paths are accumulated in the path information each time a process is executed.

2. The process management system according to claim 1, wherein the product data includes at least name data of the previous process, time data when production of the product is started, and time data when production of the product is finished.

3. The process management system according to claim 1 or 2, wherein the partial object data includes at least name data of the next process, time data when use of the partial object is started, and time data when use of the partial object is finished.

4. The process management system according to any of claims 1 to 3, wherein a storage means which stores the path information obtained from the management data generation means is attached to the product and the partial object.

5. The process management system according to claim 4, wherein the storage means is an IC tag.

6. A computer readable recording medium storing management data for managing each process of products produced through a plurality of processes, comprising:
a plurality of article group storage areas respectively corresponding to a plurality of article groups which correspond to a cluster of articles constituting a product group carried between processes,
wherein, for each of the plurality of article group storage areas, management data is formed as a single file,
wherein, in regard to each relationship between processes, the management data includes:
an article group identification data for identifying each article group;
data which is associated with the article group identification data and relates to a process in which the article group is used, the data including first process data concerning a first process in which produced articles are collected to form the article group, and second process data concerning a second process in which articles are extracted from the article group; and
path data corresponding to path information indicating that the articles are transferred from the first process to the corresponding second process, the path data being formed such that paths are accumulated therein each time a process is executed.
